# EUROPEAN PATENT SPECIFICATION

(11) **EP 2 124 467 B1**
(45) Date of publication and mention of the grant of the patent: **17.05.2017**
(21) Application number: 07860377.6
(22) Date of filing: 27.12.2007
(51) Int. Cl.: H04W 28/06

(54) **TRANSMITTER, RECEIVER, MOBILE STATION AND WIRELESS BASE STATION**
SENDER, EMPFÄNGER, MOBILSTATION UND DRAHTLOSE BASISSTATION
ÉMETTEUR, RÉCEPTEUR, STATION MOBILE ET STATION DE BASE SANS FIL

(30) Priority: 28.12.2006 JP 2006356622
(43) Date of publication of application: 25.11.2009
(73) Proprietor: NTT DOCOMO, INC., Chiyoda-ku Tokyo 100-6150 (JP)
(72) Inventor: HARADA, Atsushi, 11-1, Nagatacho 2-chome, Chiyoda-ku Tokyo 100-6150 (JP); ISHII, Minami, 11-1, Nagatacho 2-chome, Chiyoda-ku Tokyo 100-6150 (JP); ABETA, Sadayuki, 11-1, Nagatacho 2-chome, Chiyoda-ku Tokyo 100-6150 (JP); UMESH, Anil, 11-1, Nagatacho 2-chome, Chiyoda-ku Tokyo 100-6150 (JP)
(74) Representative: Hoffmann Eitle
(86) International application number: PCT/JP2007/075155
(87) International publication number: WO 2008/081882

(56) References cited:
- EP-A2- 1 180 878
- WO-A1-2005/006599
- WO-A1-2005/006599
- WO-A1-2005/122528
- WO-A1-2005/125125
- WO-A1-2005/125125
- WO-A2-2005/076688
- JP-A- 2008 048 326
- US-A1- 2006 262 811
- "Segmentation and Concatenation for VoIMS", 3GPP DRAFT; R2-051311_VOIP_FRAMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20050504, 4 May 2005 (2005-05-04), XP050128525, [retrieved on 2005-05-04]

## Description

### TECHNICAL FIELD

The present invention relates to a transmitter apparatus and a receiver apparatus.

### BACKGROUND ART

Document WO 2005/006599 A1 relates to a packet data generating method and apparatus for supporting multiple services in a wireless packet data communication system where an MS transmits two or more traffics to a BS on one of a reverse PDCH, a reverse FCH, and a reverse DCCH. To generate a PDU using non-signaling traffic and/or signaling traffic for one of the reverse physical channels, a multiplex option is determined during service negotiations between the MS and the BS. The multiplex option defines a traffic format having a header and a payload including traffic data, and the header includes a service reference identifier field, a length indicator field indicating the presence or absence of a length field, and the length field indicating the length of the traffic data. A PDU is generated by formatting a reverse traffic to have a header and a payload according to the determined multiplex option.

Document EP 1 180 878 A2 relates to a method for inserting a PDU LI in an RLC. If a current PDU size corresponds to the total size of components of the PDU and the current PDU has information indicating that the current PDU size corresponds to the total size of components of the PDU, a component of the next PDU does not include information indicating that the current PDU size corresponds to the total size of components of the PDU. Therefore, the next PDU is free from unnecessary insertion of the LI value so that waste of network resources can be prevented and overhead required for processing unnecessary LI values also can be reduced.

Document WO 2005/125125 A1 relates to a system for processing data units of a radio protocol layer. A reordering buffer for reordering data blocks is provided for each logical channel. Unnecessary data transmission delay is prevented and transmission efficiency at a radio interface is enhanced because data units of a MAC-d SDU or MAC-d PDU are reordered compared to the conventional art in which the reordering operation is performed according to the units of a MAC-e PDU.

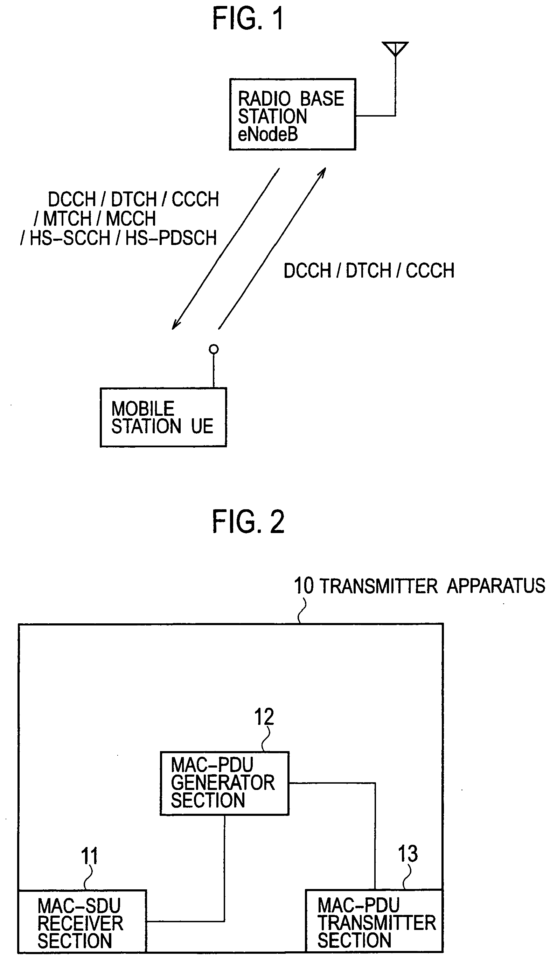

As shown in Fig. 1, a mobile communication system standardized by the 3GPP (3rd Generation Partnership Project) is configured as follows. Specifically, a radio base station NodeB (transmitter apparatus) is configured to transmit a DCCH (Dedicated Control Channel), a DTCH (Dedicated Traffic Channel), a CCCH (Common Control Channel) and the like, to a mobile station UE (receiver apparatus) in downlink.

On the other hand, in uplink, the mobile station UE (transmitter apparatus) is configured to transmit a DCCH, a DTCH, a CCCH and the like, to the base station NodeB (receiver apparatus).

Moreover, as a logical channel for MBMS (Multimedia Broadcast and Multicast Service) standardized by the 3GPP, the radio base station NodeB (transmitter apparatus) is configured to transmit an MTCH (MBMS Traffic Channel) and an MCCH (MBMS Control Channel) to the mobile station UE (receiver apparatus) in downlink.

In addition, in downlink, as a physical channel for the HSDPA (High Speed Downlink Packet Access) that is the downlink high speed packet communication standard defined by the 3GPP, the radio base station NodeB (transmitter apparatus) is configured to transmit an HS-SCCH (High Speed Shared Control Channel), an HS-PDSCH (High Speed Physical Downlink Shared Channel) and the like, to the mobile station UE (receiver apparatus).

Additionally, in the HSDPA, the radio base station NodeB (transmitter apparatus) is configured to generate an MAC-hs PDU (Protocol Data Units) in the MAC-hs layer by multiplexing MAC-d PDUs received from the MAC-d layer, and to transmit the generated MAC-hs PDU by using the HS-DSCH (High Speed Downlink Shared Channel) associated with the HS-PDSCH.

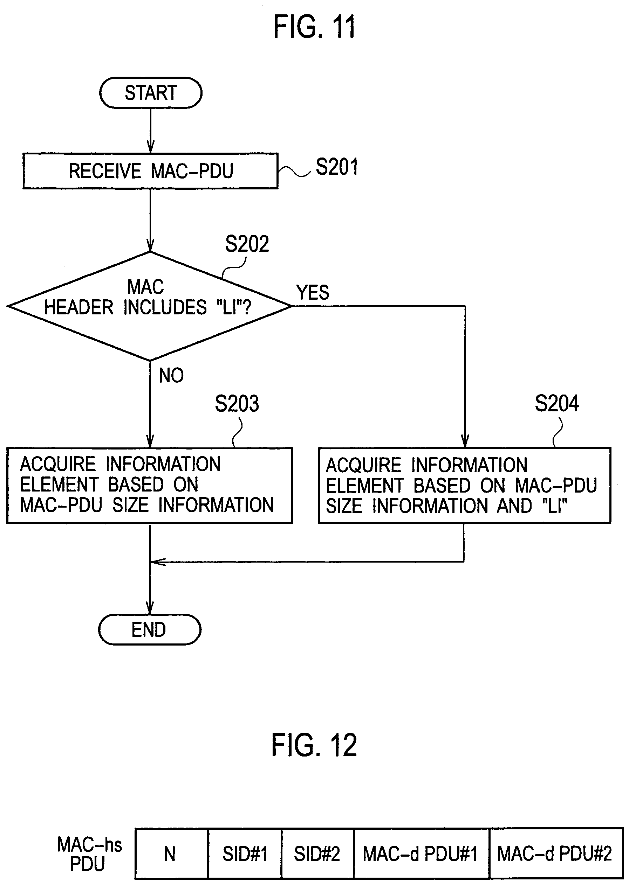

Here, the MAC-d PDUs multiplexed into the MAC-hs PDU are in a fixed size for each MAC-d flow. As shown in Fig. 12, a MAC header is added to the MAC-hs PDU in the MAC-hs layer of the radio base station NodeB (transmitter apparatus), the MAC header including an "SID (Size Index Identifier)" indicative of the size of an MAC-d PDU and "N (Number of MAC-d PDUs)" indicative of the number of the MAC-d PDUs for each MAC-d flow.

However, unlike the HSDPA, high-speed packet communications such as LTE (Long Term Evolution) are characterized in that the size of an MAC-SDU multiplexed into a MAC-PDU is variable, and that the size of the MAC-PDU transmittable per unit time is large. Accordingly, there is an increase in the number of bits necessary for "LI (Length Indicator)" indicating the sizes of respective MAC-SDUs, leading to a problem that overhead in header information increases as the number of multiplexed MAC-SDUs increases.

### Non-patent Document 1: 3GPP TS 25.321 v7.0.0

### DISCLOSURE OF THE INVENTION

The present invention has been made in consideration of the above problem, and has an objective to provide a transmitter apparatus and a receiver apparatus that are capable of mitigating an overhead increase caused by information indicating the size of a data unit being multiplexed.

The invention is described in the appended claims.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a transmitter apparatus according to the first embodiment of the present invention.
[Fig. 3] Fig. 3 is a diagram showing a protocol stack in the mobile communication system according to the first embodiment of the present invention.
[Fig. 4] Fig. 4 is a diagram showing an example of a format of an MAC-PDU transmitted by a transmitter apparatus according to the first embodiment of the present invention.
[Fig. 5] Fig. 5 is a diagram showing an example of a format of an MAC-PDU transmitted by a transmitter apparatus according to the first embodiment of the present invention.
[Fig. 6] Fig. 6 is a diagram showing an example of a format of an MAC-PDU transmitted by the transmitter apparatus according to the first embodiment of the present invention.
[Fig. 7] Fig. 7 is a diagram showing an example of a format of an MAC-PDU transmitted by the transmitter apparatus according to the first embodiment of the present invention.
[Fig. 8] Fig. 8 is a diagram showing an example of a format of an MAC-PDU transmitted by the transmitter apparatus according to the first embodiment of the present invention.
[Fig. 9] Fig. 9 is a functional block diagram of a receiver apparatus according to the first embodiment of the present invention.
[Fig. 10] Fig. 10 is a flowchart showing an operation of the transmitter apparatus according to the first embodiment of the present invention.
[Fig. 11] Fig. 11 is a flowchart showing an operation of the receiver apparatus according to the first embodiment of the present invention.
[Fig. 12] Fig. 12 is a diagram showing an example of a format of an MAC-hs PDU used in HSDPA.

### BEST MODE FOR CARRYING OUT THE INVENTION

### (Configuration of Mobile Communication System According to First Embodiment of Present Invention)

### (Configuration of Mobile Communication System According to First Embodiment of the Present Invention)

With reference to Figs. 1 to 9, descriptions will be given of a configuration of a mobile communication system including a transmitter 10 and a receiver 30 according to a first embodiment of the present invention. The configuration of the mobile communication system according to the present embodiment is one standardized under LTE.

Here, a radio base station eNodeB may be the transmitter apparatus 10 according to the present embodiment, and a mobile station UE may be the receiver apparatus 30 according to the present embodiment. Instead, a radio base station eNodeB may be the receiver apparatus 30 according to the present embodiment, and a mobile station UE may be the transmitter apparatus 10 according to the present embodiment.

As shown in Fig. 2, the transmitter apparatus 10 includes an MAC-SDU (Service Data Unit) receiver section 11, an MAC-PDU generator section 12 and an MAC-PDU transmitter section 13, which serve as an MAC (Media Access Control) layer (first layer) function.

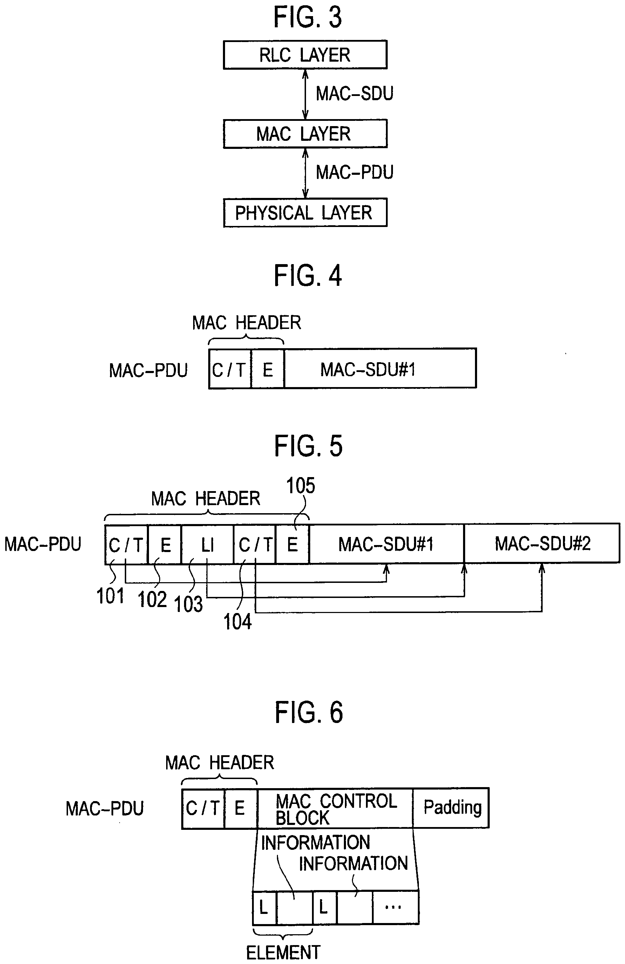

The MAC-SDU receiver section 11 is configured to receive an MAC-SDU (a higher layer data unit) from an RLC (Radio Link Control) layer (a layer higher than an MAC layer) (see Fig. 3).

The MAC-PDU generator section 12 is configured to generate an MAC-PDU by multiplexing an information element which is any of the MAC-SDU received from the RLC layer, an MAC control block (control information), and a Padding (padding information).

The MAC-PDU generator section 12 is configured to add an MAC header (header information) including "LI (information element size information)" when two or more information elements are multiplexed into the MAC-PDU (see Figs. 5 to 8). The "LI" indicates the sizes of the two or more information elements.

As shown in Figs. 4 to 8, the number of "LIs" included in the header information is one number smaller than the number of multiplexed information elements. Note that each of the MAC-SDU, the MAC control block, and the Padding is variable.

As shown in Fig. 4 for example, the MAC-PDU generator section 12 is configured not to insert the "LI" into the MAC header when only one MAC-SDU #1 is multiplexed into the MAC-PDU.

In the MAC-PDU format example shown in Fig. 4, the MAC header includes a set composed of "C/T" and "E".

Here, "C/T" is information identifying the logical channel for an MAC-SDU, an MAC control block, and a Padding, which are multiplexed into the MAC-PDU.

For example, when "E" is "0", the "E" indicates that the "E" is positioned at the end of the MAC header, and is followed by any one of the MAC-SDU, the MAC control block and the Padding. On the other hand, when "E" is "1" , the "E" indicates that the "E" is not positioned at the end of the MAC header, but is followed by another set composed of "LI", "C/T" and "E".

As shown in Fig. 5, the MAC-PDU generator section 12 is configured to insert one "LI" into the MAC header when two MAC-SDUs (an MAC-SDU #1 and an MAC-SDU #2) are multiplexed into the MAC-PDU.

In the MAC-PDU format example shown in Fig. 5, the MAC header includes a set composed of "C/T" 101 and "E" 102 and a set composed of "LI" 103, "C/T" 104, and "E" 105.

Here, "C/T" 101 is information identifying the logical channel for the MAC-SDU #1 multiplexed into the MAC-PDU, and "E" 102 indicates that "E" 102 is not positioned at the end of the MAC header.

"LI" 103 is information indicating the size of either the MAC-SDU #1 or the MAC-SDU #2. Moreover, "C/T" 104 is information identifying the logical channel for the MAC-SDU #2 multiplexed into the MAC-PDU, and "E" 105 indicates that "E" 105 is positioned at the end of the MAC header.

As shown in Fig. 6, the MAC-PDU generator section 12 is configured not to insert the "LI" into the MAC header when only an MAC control block and a Padding are multiplexed into the MAC-PDU (in other words, when the MAC-SDU is not multiplexed).

In the MAC-PDU format example shown in Fig. 6, the MAC header includes a set composed of "C/T" and "E".

As shown in Fig. 6, an MAC control block consists of multiple elements each having information and "L" indicating the size of the information. Accordingly, the size of the MAC control block can be identified without "LI".

Here, "C/T" is information indentifying the Padding multiplexed into the MAC-PDU, and "E" indicates that the "E" is positioned at the end of the MAC header.

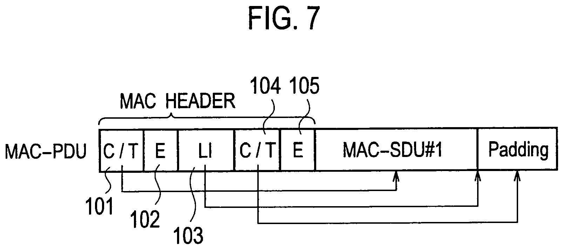

As shown in Fig. 7, the MAC-PDU generator section 12 is configured to insert one "LI" into the MAC header when an MAC-SDU #1 and a Padding are multiplexed into the MAC-PDU.

In the MAC-PDU format example shown in Fig. 7, the MAC header includes a set composed of "C/T" 101 and "E" 102 and a set composed of "LI" 103, "C/T" 104, and "E" 105.

Here, "C/T" 101 is information identifying the logical channel for the MAC-SDU #1 multiplexed into the MAC-PDU, and "E" 102 indicates that "E" 102 is not positioned at the end of the MAC header.

"LI" 103 is information indicating the size of either the MAC-SDU #1 or Padding. "C/T" 104 is information identifying the Padding multiplexed into the MAC-PDU. "E" 105 indicates that "E" 105 is positioned at the end of the MAC header.

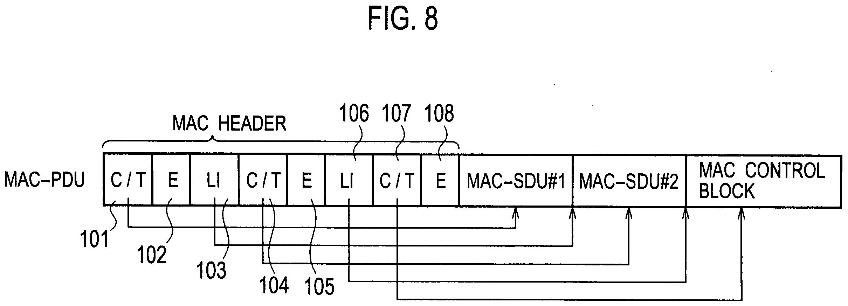

As shown in Fig. 8, the MAC-PDU generator section 12 is configured to insert two "LIs" into the MAC header when a first MAC-SDU #1, a second MAC-SDU #2, and an MAC control block are multiplexed into the MAC-PDU.

In the MAC-PDU format example shown in Fig. 8, the MAC header includes a set composed of "C/T" 101 and "E" 102, a set composed of "LI" 103, "C/T" 104, and "E" 105, and a set composed of "LI" 106, "C/T" 107, and "E" 108.

Here, "C/T" 101 is information identifying the logical channel for the MAC-SDU #1 multiplexed into the MAC-PDU, and "E" 102 indicates that "E" 102 is not positioned at the end of the MAC header.

"LI" 103 is information indicating the size of the MAC-SDU #1. "C/T" 104 is information identifying the logical channel for the MAC-SDU #2 multiplexed into the MAC-PDU. "E" 105 indicates that "E" 105 is not positioned at the end of the MAC header.

"LI" 106 is information indicating the size of the MAC-SDU #2. "C/T" 107 is information identifying the MAC control block multiplexed into the MAC-PDU. "E" 108 indicates that "E" 108 is positioned at the end of the MAC header.

The MAC-PDU transmitter section 13 is configured to transmit the MAC-PDU generated by the MAC-PDU generator section 12 to the physical layer, as a single transport block.

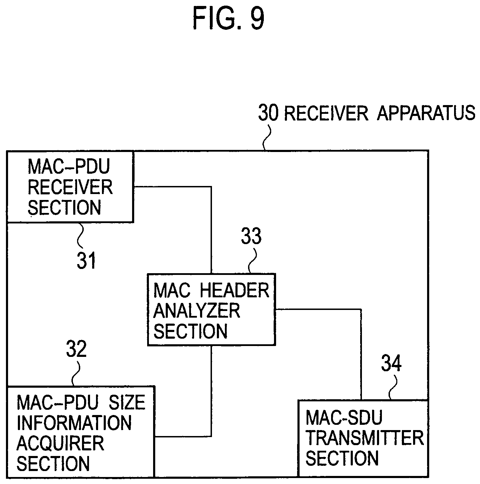

As shown in Fig. 9, as MAC layer functions, the receiver apparatus 30 includes an MAC-PDU receiver section 31, an MAC-PDU size information acquirer section 32, an MAC header analyzer section 33, and an MAC-SDU transmitter section 34.

The MAC-PDU receiver section 31 is configured to receive the MAC-PDU, transmitted by the transmitter apparatus 10, via the physical layer (see Fig. 3).

The MAC-PDU size information acquirer section 32 is configured to acquire MAC-PDU size information from the physical layer (layer lower than the MAC layer). The MAC-PDU size information indicates the size of the MAC-PDU.

Specifically, the physical layer is configured to notify, to the MAC-PDU size information acquirer section 32, a transport block size by using an L1/L2 control channel (MAC-PDU size information), the transport block size being equivalent to the size of the MAC-PDU.

The MAC header analyzer section 33 is configured to detect the size of an information element (an MAC-SDU, an MAC control block, or a Padding) multiplexed into the MAC-PDU, based on "LI (information element size information)" included in the MAC header of the MAC-PDU received in the MAC layer and the MAC-PDU size information acquired by the MAC-PDU size information acquirer section 32.

Here, when the MAC header of the MAC-PDU received by the MAC-PDU receiver section 31 includes no "LI", the MAC header analyzer section 33 can detect the size of the information element (an MAC-SDU, an MAC control block, or a Padding) multiplexed into the MAC-PDU, based on the size of the MAC-PDU indicated by the MAC-PDU size information acquired by the MAC-PDU size information acquirer section 32 and the size of the MAC header.

In this case, specifically, the MAC header analyzer section 33 obtains the size of the information element multiplexed into the MAC-PDU by subtracting the size of the MAC header from the size of the MAC-PDU.

In the example in Fig 4, based on "C/T", the MAC header analyzer section 33 recognizes that an MAC-SDU #1 is the information element multiplexed into the MAC-PDU. Then, the MAC header analyzer section 33 recognizes that a value obtained by subtracting the size of the MAC header from the size of the MAC-PDU is the size of the MAC-SDU #1 multiplexed into the MAC-PDU.

Note that, as to an MAC control block consisting of multiple elements each having "L" and "information", the MAC header analyzer section 33 can recognize, without "C/T", that the MAC control block is multiplexed into the MAC-PDU (and the size of the MAC control block). Accordingly, in the example in Fig. 6, based on "C/T", the MAC header analyzer section 33 recognizes that the Padding is an information element multiplexed into the MAC-PDU other than the MAC control block and recognizes that a value obtained by subtracting the size of the MAC header and the size of the MAC control block from the size of the MAC-PDU is the size of the Padding multiplexed into the MAC-PDU.

The MAC-SDU transmitter section 34 is configured to extract the information element from the MAC-PDU, based on the size of the information element detected by the MAC header analyzer 33.

Moreover, the MAC-SDU transmitter section 34 is configured to transmit the extracted MAC-SDU to the RLC layer.

### (Operation of Mobile Communication System According to First Embodiment of the Present Invention)

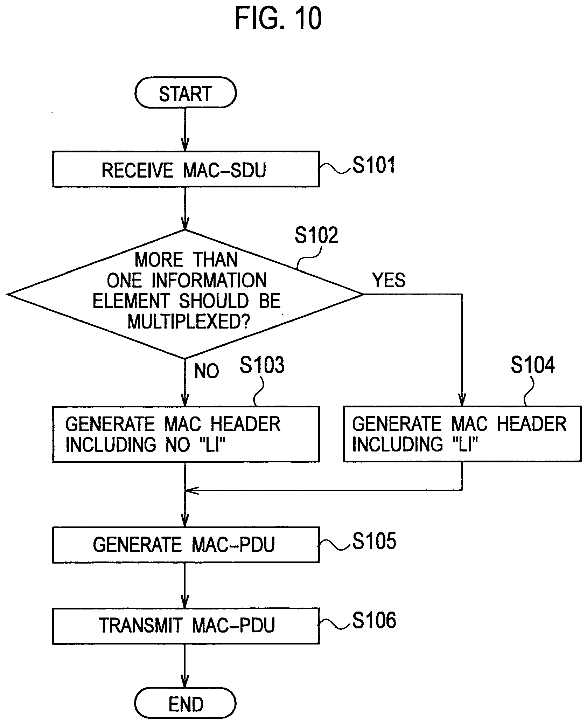

With reference to Figs. 10 and 11, description will be given of an operation of the mobile communication system according to the first embodiment of the present invention.

In the first place, an operation of the transmitter apparatus 10 according to the present embodiment will be described with reference to Fig. 10.

As shown in Fig. 10, in Step S101, an MAC-layer function of the transmitter apparatus 10 receives an MAC-SDU to be transmitted to the receiver apparatus 30, from the RLC layer of the transmitter apparatus 10.

In Step S102, the MAC-layer function of the transmitter apparatus 10 determines whether or not multiple information elements should be multiplexed into a single MAC-PDU.

When determined that multiple information elements should not be multiplexed, the MAC layer function generates an MAC header including no "LI" (see Fig. 4), in Step S103.

On the other hand, when determined that multiple information elements should be multiplexed, the MAC layer function generates an MAC header including "LI". The number of "LI" included in the MAC header is one number smaller than the number of the multiple information elements being multiplexed (see Figs. 5, 7, and 8), in Step S104.

Exceptionally, when multiplexing one MAC control block and one Padding into one MAC-PDU, the MAC function generates an MAC header including no "LI" (see Fig. 6).

In Step S105, the MAC layer function generates an MAC-PDU in which the generated MAC header is added. Then in Step S106, an MAC layer function transmits the generated MAC-PDU to the receiver apparatus 30 via the physical layer of the transmitter apparatus 10.

In the second place, an operation of the receiver apparatus 30 according to the present embodiment will be described with reference to Fig. 11.

As shown in Fig. 11, the MAC layer function of the receiver apparatus 30 receives the MAC-PDU transmitted by the transmitter apparatus 10, through the physical layer of the receiver apparatus 30.

In Step S202, the MAC layer function of the receiver apparatus 30 determines whether or not the MAC header added in the MAC-PDU thus received includes "LI".

When determined that "LI" is not included, the MAC layer function of the receiver apparatus 30 identifies an information element multiplexed into the MAC-PDU in Step S203, based on "C/T" included in the MAC header. Then, the MAC layer function acquires the information element thus identified (e.g., an MAC-SDU), based on the size of the MAC-PDU included in the MAC-PDU size information notified of by the physical layer and on the size of the MAC header.

On the other hand, when determined that "LI" is included, the MAC layer function of the receiver apparatus 30 recognizes an information element multiplexed into the MAC-PDU by use of "C/T" included in the MAC header, in Step S204. Then, the MAC layer function acquires the information element thus recognized (e.g., an MAC-SDU), based on the size of the MAC-PDU included in the MAC-PDU size information notified of from the physical layer, the size of the MAC header, and "LI".

### (Operations and Effects of Mobile Communication System According to First Embodiment of the Present Invention)

The mobile communication system according to the first embodiment of the present invention allows the number of "LIs" included in an MAC header to be one number smaller than the number of information elements multiplexed into an MAC-PDU. In high-speed packet communications, this can mitigate an overhead increase caused by "LI" indicating the size of an MAC-SDU after being multiplexed.

Hereinabove, the present invention has been described in detail by use of the foregoing embodiment. It is obvious, however, to those skilled in the art that the present invention should not be limited to the embodiment described in this description. The present invention is implementable as modified and improved embodiments without departing from the scope of the present invention defined by the appended claims.

### INDUSTRIAL APPLICABILITY

As described above, the present invention can provide a transmitter and a receiver that are capable of mitigating an overhead increase caused by information indicating the size of a data unit after being multiplexed, in high-speed packet communications.

## Claims

1. A transmitter apparatus comprising:
a MAC-PDU generator section (12) configured to generate a MAC-PDU in a MAC layer by using one or more variable-length MAC-SDUs received from an RLC layer, and
a MAC-PDU transmitter section (13) configured to transmit the generated MAC-PDU,
**characterized in that**
the MAC-PDU generator section (12) is configured to insert one piece of information element size information (103) indicating a size of one of the multiplexed variable-length MAC-SDUs into a MAC header, when two variable-length MAC-SDUs are multiplexed into the MAC-PDU.

2. A receiver apparatus (30) configured to receive a MAC-PDU including a MAC header, the MAC header including information element size information (103) indicating the size of one of multiplexed variable-length MAC-SDU, the MAC header including one piece of information element size information (103) when two variable-length MAC-SDUs are multiplexed into the MAC-PDU, the receiver apparatus comprising:
a MAC-PDU size information acquirer section (32) configured to acquire MAC-PDU size information from a physical layer, the MAC-PDU size information indicating a size of a MAC-PDU;
a header information analyzer section (33) configured to detect a size of one of MAC-SDUs multiplexed into the MAC-PDU, based on the piece of information element size information (103) included in the MAC header in the MAC-PDU received in the MAC layer and the acquired MAC-PDU size information; and
an extractor section configured to extract the MAC-SDU from the MAC-PDU, based on the detected size of the MAC-SDU.

## Patentansprüche

1. Übertragungsvorrichtung, umfassend:
einen MAC-PDU-Erzeugungsabschnitt (12), der dazu konfiguriert ist, eine MAC-PDU in einer MAC-Schicht zu erzeugen unter Verwendung einer oder mehrerer MAC-SDUs mit variabler Länge, die von einer RLC-Schicht empfangen werden, und
einen MAC-PDU-Übertragungsabschnitt (13), der dazu konfiguriert ist, die erzeugte MAC-PDU zu senden,
**dadurch gekennzeichnet, dass**
der MAC-PDU-Erzeugungsabschnitt (12) dazu konfiguriert ist, eine Informationselement-Größeninformation (103), die eine Größe von einer der gemultiplexten MAC-SDUs mit variabler Länge angibt, in einen MAC-Header einzufügen, wenn zwei MAC-SDUs mit variabler Länge in die MAC-PDU gemultiplext werden.

2. Empfangsvorrichtung (30), die dazu konfiguriert ist, eine einen MAC-Header enthaltende MAC-PDU zu empfangen, wobei der MAC-Header Informationselement-Größeninformationen (103) enthält, die die Größe von einer von gemultiplexten MAC-SDU mit variabler Länge angeben, wobei der MAC-Header eine Informationselement-Größeninformation (103) enthält, wenn zwei MAC-SDUs mit variabler Länge in die MAC-PDU gemultiplext sind, wobei die Empfängervorrichtung Folgendes umfasst:
einen MAC-PDU-Größeninformationen-Erfassungsabschnitt (32), der dazu konfiguriert ist, MAC-PDU-Größeninformationen aus einer physikalischen Schicht zu erfassen, wobei die MAC-PDU-Größeninformationen eine Größe einer MAC-PDU angeben;
einen Headerinformationen-Analysatorabschnitt (33), der dazu konfiguriert ist, eine Größe von einer von MAC-SDUs, die in die MAC-PDU gemultiplext sind, basierend auf der Informationselement-Größeninformation (103), die in dem MAC-Header in der MAC-PDU, die in der MAC-Schicht empfangen wird, enthalten ist, und der erfassten MAC-PDU-Größeninformationen zu erkennen; und
einen Extraktorabschnitt, der dazu konfiguriert ist, die MAC-SDU aus der MAC-PDU basierend auf der erkannten Größe der MAC-SDU zu extrahieren.

## Revendications

1. Appareil émetteur comprenant :
une section de génération de MAC-PDU (12) configurée pour générer une MAC-PDU dans une couche MAC en utilisant une ou plusieurs MAC-SDU de longueur variable reçues d'une couche RLC, et
une section d'émission de MAC-PDU (13) configurée pour émettre la MAC-PDU générée,
**caractérisé en ce que**
la section de génération de MAC-PDU (12) est configurée pour insérer une information de taille d'élément d'information (103) indiquant une taille d'une des MAC-SDU de longueur variable multiplexées dans un en-tête MAC, lorsque deux MAC-SDU de longueur variable sont multiplexées dans la MAC-PDU.

2. Appareil récepteur (30) configuré pour recevoir une MAC-PDU incluant un en-tête MAC, l'en-tête MAC incluant des informations de taille d'élément d'information (103) indiquant la taille d'une des MAC-SDU de longueur variable multiplexées, l'en-tête MAC incluant une information de taille d'élément d'information (103) lorsque deux MAC-SDU de longueur variable sont multiplexées dans la MAC-PDU, l'appareil récepteur comprenant :
une section d'acquisition d'informations de taille de MAC-PDU (32) configurée pour acquérir des informations de taille de MAC-PDU provenant d'une couche physique, les informations de taille de MAC-PDU indiquant une taille d'une MAC-PDU ;
une section d'analyse d'informations d'en-tête (33) configurée pour détecter une taille d'une des MAC-SDU multiplexées dans la MAC-PDU, sur la base des informations de taille d'élément d'information (103) incluses dans l'en-tête MAC de la MAC-PDU reçue dans la couche MAC et des informations de taille de MAC-PDU acquises ; et
une section d'extraction configurée pour extraire la MAC-SDU de la MAC-PDU, sur la base de la taille détectée de la MAC-SDU.
